# EUROPEAN PATENT APPLICATION

(11) **EP 4 852 105 A1**
(43) Date of publication of application: **09.12.2026**
(21) Application number: 24921908.0
(22) Date of filing: 23.12.2024
(51) Int. Cl.: H01M 8/04, C01B 3/04, H01M 8/0606, H01M 8/04014, H01M 8/04111, H01M 8/10

(54) **FUEL CELL SYSTEM**

(30) Priority: 02.02.2024 JP 2024014762
(71) Applicant: IHI Corporation, Koto-ku Tokyo 135-8710 (JP)
(72) Inventor: SAKISAKA, Ryota, Tokyo 135-8710 (JP); SUZUKI, Tetsu, Tokyo 135-8710 (JP)
(74) Representative: TBK
(86) International application number: PCT/JP2024/045353
(87) International publication number: WO 2025/164155

(57) **Abstract**

A fuel cell system 100 includes: a tank 110 configured to store ammonia; a reformer 120 configured to thermally decompose ammonia supplied from the tank 110 to generate hydrogen; a polymer electrolyte fuel cell 130 configured to generate electricity using, as a fuel, the hydrogen generated by the reformer 120; a turbine 142 configured to be rotated by a first exhaust gas produced in the polymer electrolyte fuel cell 130; a compressor 144 configured to compress an oxygen-containing gas and supply the oxygen-containing gas to the polymer electrolyte fuel cell 130; and a supply device 160 configured to cause a second exhaust gas discharged from the reformer 120 to join the first exhaust gas. The compressor 144 is connected to the turbine 142.

## Description

### Technical Field

The present disclosure relates to a fuel cell system. This application claims the benefit of priority from Japanese Patent Application No. 2024-14762 filed on February 2, 2024, the content of which is incorporated herein.

### Background Art

Ammonia is higher in energy density than hydrogen. The use of ammonia as a fuel for a fuel cell system has been therefore under consideration (e.g., Patent Literature 1).

A polymer electrolyte fuel cell having high responsiveness to a load fluctuation has been under consideration as a fuel cell used for a fuel cell system that uses ammonia. It is not, however, possible to provide the inside of the polymer electrolyte fuel cell with a mechanism that thermally decomposes ammonia due to the temperature constraint imposed by polymers. This disables the polymer electrolyte fuel cell from generating electricity if directly supplied with ammonia. Accordingly, it has been considered to provide the fuel cell system including the polymer electrolyte fuel cell with a reformer that thermally decomposes ammonia to generate hydrogen.

### Citation List

### Patent Literature

| | |
|---|---|
| Patent Literature 1: | JP 2020-98699A |

### Summary

### Technical Problem

Incidentally, in the polymer electrolyte fuel cell, an oxygen-containing gas such as air needs to be supplied. The fuel cell system including the polymer electrolyte fuel cell is therefore provided with an electric compressor. In this case, the power generation efficiency of the fuel cell system decreases by the electric power to be consumed by the electric compressor.

Accordingly, the development of a technology that makes it possible to reduce electric power to be consumed in the fuel cell system has been requested.

In view of such a problem, an object of the present disclosure is to provide a fuel cell system that makes it possible to reduce electric power to be consumed.

### Solution to Problem

To solve the problem, a fuel cell system according to one aspect of the present disclosure includes: a tank configured to store ammonia; a reformer configured to thermally decompose ammonia supplied from the tank to generate hydrogen; a polymer electrolyte fuel cell configured to generate electricity using, as a fuel, the hydrogen generated by the reformer; a turbine configured to be rotated by a first exhaust gas produced in the polymer electrolyte fuel cell; a compressor configured to compress an oxygen-containing gas and supply the oxygen-containing gas to the polymer electrolyte fuel cell; and a supply device configured to cause a second exhaust gas discharged from the reformer to join the first exhaust gas or exchange heat between the second exhaust gas and the first exhaust gas. The compressor is connected to the turbine.

In addition, the fuel cell system may include: a combustor configured to combust the hydrogen generated by the reformer; and a third exhaust gas supply flow path configured to supply a third exhaust gas produced in the combustor to the reformer.

In addition, the fuel cell system may include a heat exchanger configured to exchange heat between the hydrogen generated by the reformer and the first exhaust gas produced in the polymer electrolyte fuel cell.

In addition, a portion of an oxygen-containing gas to be fed to the polymer electrolyte fuel cell may be diverted and fed to the combustor. The turbine may include a first exhaust gas inlet port and a second exhaust gas inlet port. The second exhaust gas discharged from the reformer may be fed to the first exhaust gas inlet port. The first exhaust gas produced in the polymer electrolyte fuel cell may be fed to the second exhaust gas inlet port.

In addition, the fuel cell system may include: a combustor turbine configured to be rotated by the second exhaust gas discharged from the reformer; and a combustor compressor configured to compress an oxygen-containing gas and supply the oxygen-containing gas to the combustor. The combustor compressor is connected to the combustor turbine.

### Advantageous Effects of Invention

The present disclosure makes it possible to reduce electric power to be consumed.

### Brief Description of Drawings

[FIG. 1] FIG. 1 is a diagram describing an example of a fuel cell system according to a first embodiment.
[FIG. 2] FIG. 2 is a diagram describing an example of a fuel cell system according to a second embodiment.
[FIG. 3] FIG. 3 is a diagram describing an example of a fuel cell system according to a third embodiment.
[FIG. 4] FIG. 4 is a diagram describing an example of a fuel cell system according to a fourth embodiment.
[FIG. 5] FIG. 5 is a diagram describing an example of a fuel cell system according to a fifth embodiment.
[FIG. 6] FIG. 6 is a diagram describing an example of a fuel cell system according to a sixth embodiment.

### Description of Embodiments

Hereinafter, embodiments of the present disclosure will be described in detail with reference to the appended drawings. Dimensions, materials, other specific numerical values, and the like indicated in the embodiments are merely examples for ease of understanding and are not intended to limit the present disclosure unless otherwise specified. It is noted that elements having substantially the same functions and configurations are denoted with the same reference signs in the present specification and the drawings to omit duplicate description. In addition, elements that are not directly related to the present disclosure will not be illustrated.

### [First Embodiment: Fuel Cell System 100]

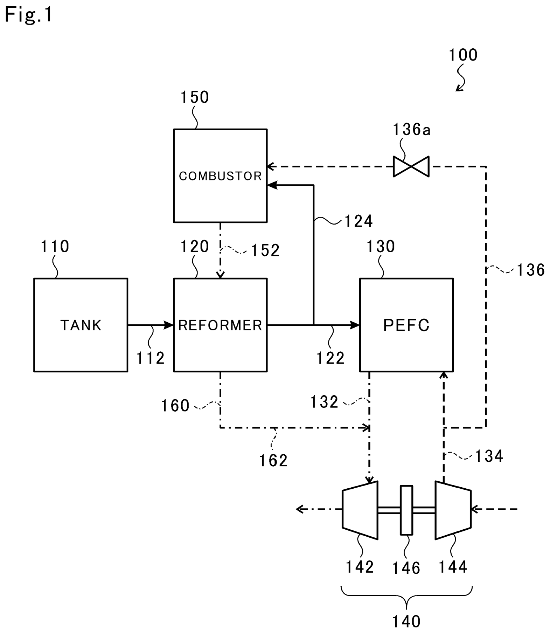

FIG. 1 is a diagram describing an example of a fuel cell system 100 according to a first embodiment. As illustrated in FIG. 1, the fuel cell system 100 according to the first embodiment includes a tank 110, a reformer 120, a polymer electrolyte fuel cell (Polymer Electrolyte Fuel Cell that will be referred to as a "PEFC" below in some cases) 130, a supercharger 140, a combustor 150, a third exhaust gas supply flow path 152, and a supply device 160. It is noted that solid arrows illustrate flows of ammonia and hydrogen in each of FIGS. 1 to 6. In addition, dashed arrows illustrate flows of an oxygen-containing gas. Dash-dotted arrows illustrate flows of a first exhaust gas, a second exhaust gas, and a third exhaust gas.

The tank 110 stores any one or both of liquid ammonia and gaseous ammonia.

The reformer 120 is connected to the tank 110 via an ammonia flow path 112. The ammonia stored in the tank 110 is supplied to the reformer 120 through the ammonia flow path 112. The reformer 120 thermally decomposes the ammonia supplied from the tank 110 to generate hydrogen. The reformer 120 is, for example, a heat exchanger that exchanges heat between the ammonia and the third exhaust gas described below. The reformer 120 transfers the heat of the third exhaust gas to the ammonia to thermally decompose the ammonia. The reformer 120 includes, for example, an ammonia passage and an exhaust gas passage. The ammonia passage is supplied with ammonia from the tank 110. For example, the ammonia passage is filled with a catalyst that promotes the thermal decomposition of ammonia. The catalyst includes, for example, any one or both of a ruthenium (Ru) catalyst and a nickel (Ni) catalyst. The exhaust gas passage is supplied with the third exhaust gas from the combustor 150 described below.

The anode (fuel electrode) of the PEFC 130 is connected to the reformer 120 via a hydrogen flow path 122. The hydrogen generated by the reformer 120 is supplied to the anode of the PEFC 130 through the hydrogen flow path 122. In addition, the cathode (air electrode) of the PEFC 130 is supplied with the oxygen-containing gas from the supercharger 140 described below. The oxygen-containing gas is, for example, air or oxygen-enriched air. The PEFC 130 generates electricity using the hydrogen generated by the reformer 120 as a fuel. The voltage of the electric power generated by the PEFC 130 is converted, for example, by a DC/DC converter and the electric power is then output to a load.

The supercharger 140 includes a turbine 142 and a compressor 144. Additionally, in the present embodiment, the supercharger 140 is, for example, an electric supercharger including a motor 146 that rotates the compressor 144 in addition to the turbine 142 and the compressor 144.

The turbine 142 is connected to the discharge port of the PEFC 130 via a first exhaust gas flow path 132. The first exhaust gas (e.g., cathode off-gas) discharged from the discharge port of the PEFC 130 is supplied to the turbine 142 through the first exhaust gas flow path 132. The turbine 142 is then rotated by the first exhaust gas produced in the PEFC 130.

The compressor 144 is connected to the turbine 142. The compressor 144 is rotated by the rotation of the turbine 142. In the present embodiment, the compressor 144 is also rotated by the motor 146 in addition to the rotation of the turbine 142. The compressor 144 compresses the oxygen-containing gas. In the present embodiment, the compressor 144 is connected to the cathode of the PEFC 130 via an oxygen-containing gas flow path 134. The oxygen-containing gas compressed by the compressor 144 is therefore supplied to the cathode of the PEFC 130 through the oxygen-containing gas flow path 134.

The combustor 150 is connected to the reformer 120 via the hydrogen flow path 122 and a hydrogen flow path 124. The hydrogen flow path 124 branches from the hydrogen flow path 122 and is connected to the combustor 150. A portion of the hydrogen generated by the reformer 120 is supplied to the combustor 150 through the hydrogen flow path 122 and the hydrogen flow path 124. In addition, the combustor 150 is connected to the compressor 144 via the oxygen-containing gas flow path 134 and an oxygen-containing gas flow path 136. The oxygen-containing gas flow path 136 branches from the oxygen-containing gas flow path 134 and is connected to the combustor 150. A portion of the oxygen-containing gas to be fed to the PEFC 130 by the compressor 144 is fed to the combustor 150 through the oxygen-containing gas flow path 134 and the oxygen-containing gas flow path 136. It is noted that the flow rate of the oxygen-containing gas requested for the combustor 150 is different from the flow rate of the oxygen-containing gas requested for the PEFC 130 and is not uniquely determined. The oxygen-containing gas flow path 136 according to the present embodiment is therefore provided with a flow control valve 136a.

The combustor 150 combusts the hydrogen generated by the reformer 120 using the oxygen-containing gas supplied from the compressor 144.

The third exhaust gas supply flow path 152 connects the discharge port of the combustor 150 and the inlet of the exhaust gas passage of the reformer 120. The third exhaust gas produced in the combustor 150 is therefore supplied to the reformer 120 through the third exhaust gas supply flow path 152.

The supply device 160 causes the second exhaust gas discharged from the reformer 120 to join the first exhaust gas produced in the PEFC 130. In the present embodiment, the supply device 160 includes, for example, a second exhaust gas flow path 162. The second exhaust gas flow path 162 connects the outlet of the exhaust gas passage of the reformer 120 and the first exhaust gas flow path 132.

As described above, the fuel cell system 100 according to the first embodiment includes the tank 110 that stores ammonia, the reformer 120 that thermally decomposes ammonia supplied from the tank 110 to generate hydrogen, the polymer electrolyte fuel cell 130 that generates electricity using, as a fuel, the hydrogen generated by the reformer 120, the turbine 142 that is rotated by the first exhaust gas produced in the polymer electrolyte fuel cell 130, the compressor 144 that is connected to the turbine 142, and compresses the oxygen-containing gas and supplies the oxygen-containing gas to the polymer electrolyte fuel cell 130, and the supply device 160 that causes the second exhaust gas discharged from the reformer 120 to join the first exhaust gas.

This allows the fuel cell system 100 according to the first embodiment to rotate the turbine 142 using the first exhaust gas produced in the polymer electrolyte fuel cell 130. It is therefore possible for the fuel cell system 100 according to the first embodiment to obtain mechanical power to be used by the compressor 144 from the rotation of the turbine 142 and reduce electric power to be consumed by the motor 146. In addition, the fuel cell system 100 according to the first embodiment supplies the high-temperature second exhaust gas discharged from the reformer 120 to the turbine 142 in addition to the first exhaust gas. This allows the fuel cell system 100 according to the first embodiment to rotate the turbine 142 using the first exhaust gas and the second exhaust gas. It is thus possible for the fuel cell system 100 according to the first embodiment to further increase mechanical power to be supplied from the turbine 142 to the compressor 144. This allows the fuel cell system 100 according to the first embodiment to further reduce electric power to be consumed by the motor 146.

### [Second Embodiment: Fuel Cell System 200]

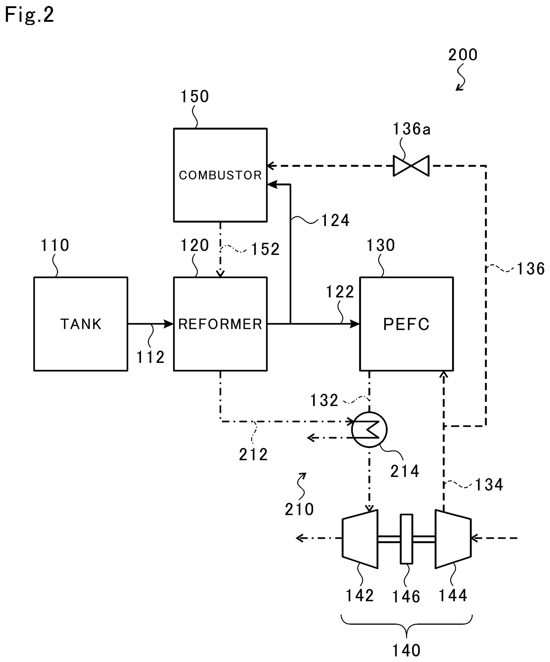

The case where the second exhaust gas as discharged from the reformer 120 is supplied to the turbine 142 in the fuel cell system 100 according to the first embodiment has been described as an example. The thermal energy of the second exhaust gas discharged from the reformer 120 may be, however, supplied to the turbine 142. FIG. 2 is a diagram describing an example of a fuel cell system 200 according to a second embodiment. As illustrated in FIG. 2, the fuel cell system 200 according to the second embodiment includes the tank 110, the reformer 120, the polymer electrolyte fuel cell 130, the supercharger 140, the combustor 150, the third exhaust gas supply flow path 152, and a supply device 210. It is noted that a component which is substantially equal to that of the fuel cell system 100 will be denoted with the same reference sign to omit description. The fuel cell system 200 according to the present embodiment is different from the fuel cell system 100 in that the fuel cell system 200 includes the supply device 210 instead of the supply device 160, and the fuel cell system 200 is the same as the fuel cell system 100 in other respects.

The supply device 210 exchanges heat between the second exhaust gas discharged from the reformer 120 and the first exhaust gas produced in the PEFC 130. In the present embodiment, the supply device 210 includes a second exhaust gas flow path 212 and a first heat exchanger 214.

The base end of the second exhaust gas flow path 212 is connected to the outlet of the exhaust gas passage in the reformer 120. The tip end of the second exhaust gas flow path 212 is open to the atmosphere.

The first heat exchanger 214 exchanges heat between the second exhaust gas discharged from the reformer 120 and the first exhaust gas that has not yet been supplied to the turbine 142. In the present embodiment, the first heat exchanger 214 exchanges heat between the second exhaust gas flowing in the second exhaust gas flow path 212 and the first exhaust gas flowing in the first exhaust gas flow path 132. This makes it possible to transfer the heat of the second exhaust gas to the first exhaust gas. The first exhaust gas is heated and the second exhaust gas is cooled.

In the present embodiment, the turbine 142 is therefore rotated by the first exhaust gas that has been subjected to heat exchange by the first heat exchanger 214.

As described above, the fuel cell system 200 according to the second embodiment includes the tank 110 that stores ammonia, the reformer 120 that thermally decomposes ammonia supplied from the tank 110 to generate hydrogen, the polymer electrolyte fuel cell 130 that generates electricity using, as a fuel, the hydrogen generated by the reformer 120, the turbine 142 that is rotated by the first exhaust gas produced in the polymer electrolyte fuel cell 130, the compressor 144 that is connected to the turbine 142, and compresses the oxygen-containing gas and supplies the oxygen-containing gas to the polymer electrolyte fuel cell 130, and the supply device 210 that exchanges heat between the second exhaust gas discharged from the reformer 120 and the first exhaust gas.

This allows the fuel cell system 200 according to the second embodiment to heat the first exhaust gas using the high-temperature second exhaust gas and then supply the heated first exhaust gas to the turbine 142. It is thus possible for the fuel cell system 200 according to the second embodiment to rotate the turbine 142 using the thermal energy of the second exhaust gas in addition to the energy of the first exhaust gas. It is thus possible for the fuel cell system 200 according to the second embodiment to further increase mechanical power to be supplied from the turbine 142 to the compressor 144. This allows the fuel cell system 200 according to the second embodiment to further reduce electric power to be consumed by the motor 146.

In addition, it is possible for the fuel cell system 200 according to the second embodiment to avoid a situation in which the turbine 142 is directly supplied with the second exhaust gas in comparison with the fuel cell system 100 according to the first embodiment. This allows the fuel cell system 200 according to the second embodiment to avoid a situation in which the turbine 142 malfunctions due to dust or the like included in the second exhaust gas.

### [Third Embodiment: Fuel Cell System 300]

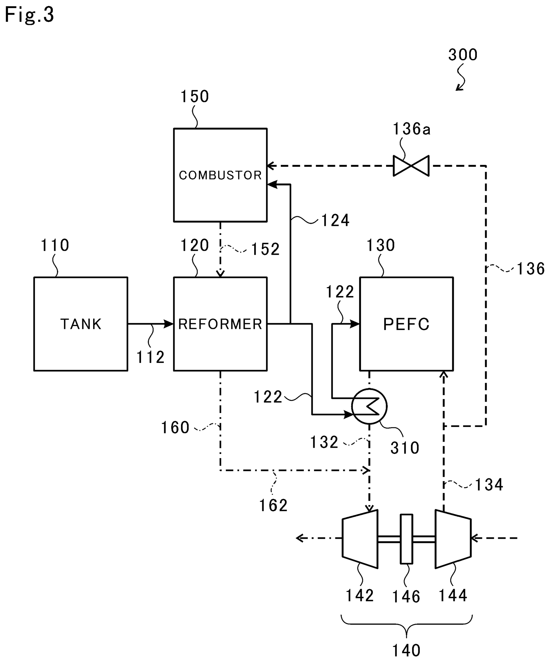

The case where the energy of the second exhaust gas discharged from the reformer 120 is supplied to the turbine 142 in the fuel cell system 100 according to the first embodiment has been described as an example. The turbine 142 may be, however, supplied with other energy in addition to the energy of the second exhaust gas discharged from the reformer 120. FIG. 3 is a diagram describing an example of a fuel cell system 300 according to a third embodiment. As illustrated in FIG. 3, the fuel cell system 300 according to the third embodiment includes the tank 110, the reformer 120, the polymer electrolyte fuel cell 130, the supercharger 140, the combustor 150, the third exhaust gas supply flow path 152, the supply device 160, and a second heat exchanger 310. It is noted that a component which is substantially equal to that of the fuel cell system 100 will be denoted with the same reference sign to omit description. The fuel cell system 300 according to the present embodiment is different from the fuel cell system 100 in that the second heat exchanger 310 is added, and the fuel cell system 300 is the same as the fuel cell system 100 in other respects.

The second heat exchanger 310 (heat exchanger) exchanges heat between the hydrogen generated by the reformer 120 and the first exhaust gas produced in the PEFC 130. In the present embodiment, the second heat exchanger 310 exchanges heat between the hydrogen flowing between the portion of the hydrogen flow path 122 connected to the hydrogen flow path 124 and the PEFC 130 and the first exhaust gas flowing between the portion of the first exhaust gas flow path 132 connected to the second exhaust gas flow path 162 and the PEFC 130. This makes it possible to transfer the heat of the hydrogen generated by the reformer 120 to the first exhaust gas. The first exhaust gas is heated and the hydrogen is cooled.

In the present embodiment, the turbine 142 is therefore rotated by the first exhaust gas and the second exhaust gas that have been subjected to heat exchange by the second heat exchanger 310.

As described above, the fuel cell system 300 according to the third embodiment includes the second heat exchanger 310 in addition to the components of the fuel cell system 100.

This allows the fuel cell system 300 according to the third embodiment to heat the first exhaust gas using the high-temperature hydrogen generated in the reformer 120 and then supply the heated first exhaust gas to the turbine 142. It is thus possible for the fuel cell system 300 according to the third embodiment to rotate the turbine 142 using the thermal energy of the hydrogen in addition to the energy of the first exhaust gas and the second exhaust gas. It is thus possible for the fuel cell system 300 according to the third embodiment to further increase mechanical power to be supplied from the turbine 142 to the compressor 144. This allows the fuel cell system 300 according to the third embodiment to further reduce electric power to be consumed by the motor 146.

In addition, it is possible for the fuel cell system 300 according to the third embodiment to decrease, using the second heat exchanger 310, the temperature of the hydrogen that has not yet been supplied to the PEFC 130. This makes it possible to avoid a situation in which the PEFC 130 degrades due to heat.

### [Fourth Embodiment: Fuel Cell System 400]

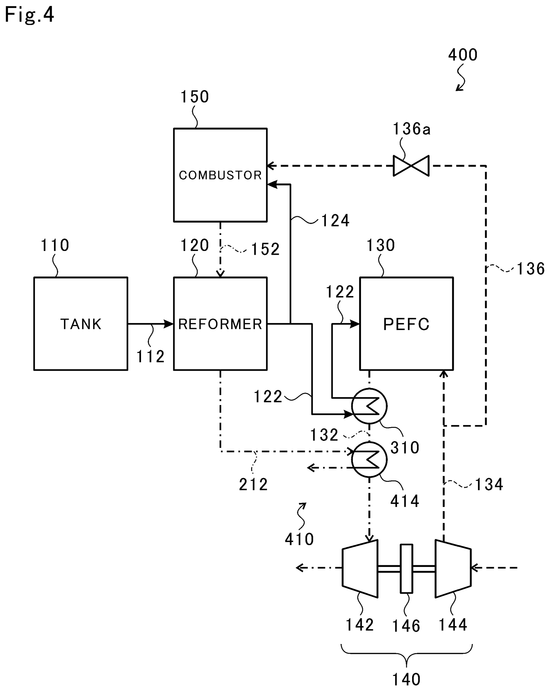

The case where the thermal energy of the second exhaust gas discharged from the reformer 120 is supplied to the turbine 142 in the fuel cell system 200 according to the second embodiment has been described as an example. The turbine 142 may be, however, supplied with other thermal energy in addition to the thermal energy of the second exhaust gas discharged from the reformer 120. FIG. 4 is a diagram describing an example of a fuel cell system 400 according to a fourth embodiment. As illustrated in FIG. 4, the fuel cell system 400 according to the fourth embodiment includes the tank 110, the reformer 120, the polymer electrolyte fuel cell 130, the supercharger 140, the combustor 150, the third exhaust gas supply flow path 152, a supply device 410, and the second heat exchanger 310. It is noted that a component which is substantially equal to that of each of the fuel cell systems 100, 200, and 300 will be denoted with the same reference sign to omit description. The fuel cell system 400 according to the present embodiment is different from the fuel cell system 200 in that the second heat exchanger 310 is added, and the fuel cell system 400 is the same as the fuel cell system 200 in other respects.

The supply device 410 exchanges heat between the second exhaust gas discharged from the reformer 120 and the first exhaust gas produced in the PEFC 130. In the present embodiment, the supply device 410 includes the second exhaust gas flow path 212 and a first heat exchanger 414.

The first heat exchanger 414 exchanges heat between the second exhaust gas discharged from the reformer 120 and the first exhaust gas that has been subjected to heat exchange by the second heat exchanger 310 and has not yet been supplied to the turbine 142. In the present embodiment, the first heat exchanger 414 exchanges heat between the second exhaust gas flowing in the second exhaust gas flow path 212 and the first exhaust gas flowing between the portion of the first exhaust gas flow path 132 provided with the second heat exchanger 310 and the turbine 142. This makes it possible to transfer the heat of the second exhaust gas discharged from the reformer 120 to the first exhaust gas that has been subjected to heat exchange. The first exhaust gas is further heated and the second exhaust gas is cooled.

In the present embodiment, the turbine 142 is therefore rotated by the first exhaust gas that has been subjected to heat exchange by the second heat exchanger 310 and the first heat exchanger 414.

As described above, the fuel cell system 400 according to the fourth embodiment includes the second heat exchanger 310 and the supply device 410.

This allows the fuel cell system 400 according to the fourth embodiment to heat the first exhaust gas using the high-temperature hydrogen and the high-temperature second exhaust gas and then supply the heated first exhaust gas to the turbine 142. It is thus possible for the fuel cell system 400 according to the fourth embodiment to rotate the turbine 142 using the thermal energy of the hydrogen and the thermal energy of the second exhaust gas in addition to the energy of the first exhaust gas. It is thus possible for the fuel cell system 400 according to the fourth embodiment to further increase mechanical power to be supplied from the turbine 142 to the compressor 144. This allows the fuel cell system 400 according to the fourth embodiment to further reduce electric power to be consumed by the motor 146.

### [Fifth Embodiment: Fuel Cell System 500]

The fuel cell system 100 according to the first embodiment is provided with the flow control valve 136a in the oxygen-containing gas flow path 136 to restrict the flow rate of the oxygen-containing gas supplied from the compressor 144 to the combustor 150. The flow control valve 136a, however, has a pressure drop and the pressure of the oxygen-containing gas to be supplied to the combustor 150 thus decreases. Therefore, the pressure of the third exhaust gas generated in the combustor 150 and the pressure of the second exhaust gas discharged from the reformer 120 also decrease. The pressure of the second exhaust gas to be supplied to the turbine 142 by the supply device 160 accordingly decreases to decrease energy to be imparted to the turbine 142 by the second exhaust gas. Accordingly, a fuel cell system 500 according to a fifth embodiment omits the flow control valve 136a and prevents the pressure of the oxygen-containing gas to be supplied to the combustor 150 from decreasing.

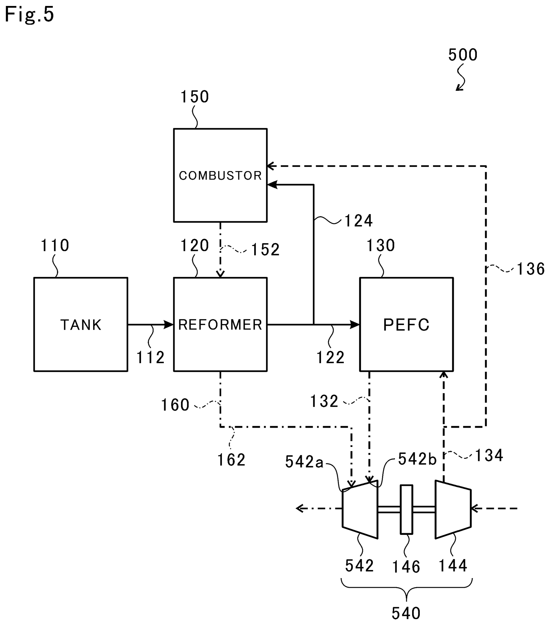

FIG. 5 is a diagram describing an example of a fuel cell system 500 according to a fifth embodiment. As illustrated in FIG. 5, the fuel cell system 500 according to the fifth embodiment includes the tank 110, the reformer 120, the polymer electrolyte fuel cell 130, a supercharger 540, the combustor 150, the third exhaust gas supply flow path 152, and the supply device 160. It is noted that a component which is substantially equal to that of the fuel cell system 100 will be denoted with the same reference sign to omit description. The fuel cell system 500 according to the present embodiment is different from the fuel cell system 100 in that a turbine 542 is added instead of the flow control valve 136a, and the fuel cell system 500 is the same as the fuel cell system 100 in other respects.

The fuel cell system 500 according to the fifth embodiment is not provided with the flow control valve 136a in the oxygen-containing gas flow path 136.

The supercharger 540 includes the turbine 542 and the compressor 144. Additionally, in the present embodiment, the supercharger 540 is, for example, an electric supercharger including the motor 146 that rotates the compressor 144 in addition to the turbine 542 and the compressor 144.

The turbine 542 is, for example, a turbine (e.g., a twin-scroll turbine or a double-scroll turbine) including two scroll flow paths. It is noted that the scroll flow paths are flow paths which connect a storage space in which a turbine wheel is stored in the turbine and an exhaust gas inlet port through which an exhaust gas is drawn from the outside. The scroll flow paths are flow paths that guide the exhaust gas drawn from the outside to the storage space. The turbine 542 includes a first exhaust gas inlet port 542a and a second exhaust gas inlet port 542b.

In the present embodiment, the second exhaust gas flow path 162 of the supply device 160 is connected to the first exhaust gas inlet port 542a. The second exhaust gas is thus drawn to the first exhaust gas inlet port 542a from the reformer 120 by the rotation of the turbine 142. This feeds the third exhaust gas to the reformer 120 from the combustor 150 through the third exhaust gas supply flow path 152. In addition, the oxygen-containing gas compressed by the compressor 144 is fed to the combustor 150 through the oxygen-containing gas flow path 134 and the oxygen-containing gas flow path 136.

In addition, in the present embodiment, the first exhaust gas flow path 132 is connected to the second exhaust gas inlet port 542b. The first exhaust gas produced in the PEFC 130 is thus fed to the second exhaust gas inlet port 542b by the rotation of the turbine 142.

As described above, the fuel cell system 500 according to the fifth embodiment does not include the flow control valve 136a, but includes the turbine 542 including the first exhaust gas inlet port 542a and the second exhaust gas inlet port 542b. The second exhaust gas discharged from the reformer 120 is fed to the first exhaust gas inlet port 542a. The first exhaust gas produced in the polymer electrolyte fuel cell 130 is fed to the second exhaust gas inlet port 542b.

It is possible to eliminate the necessity of the flow control valve 136a in the fuel cell system 500 according to the fifth embodiment by optimizing the difference between the characteristics of the respective scroll flow paths that are connected to the first exhaust gas inlet port 542a and the second exhaust gas inlet port 542b in the turbine 542 depending on the ratio between the flow rate of the oxygen-containing gas to be fed to the combustor 150 and the flow rate of the oxygen-containing gas to be fed to the PEFC 130. A pressure drop in the scroll flow path connected to the first exhaust gas inlet port 542a is extremely less than a pressure drop in the flow control valve 136a. It is therefore possible for the fuel cell system 500 according to the fifth embodiment to prevent a pressure drop by the flow control valve 136a and prevent the pressure of the oxygen-containing gas to be supplied to the combustor 150 from decreasing. This allows the fuel cell system 500 according to the fifth embodiment to prevent both the pressure of the third exhaust gas generated in the combustor 150 and the pressure of the second exhaust gas discharged from the reformer 120 from decreasing. This allows the fuel cell system 500 according to the fifth embodiment to prevent the pressure of the second exhaust gas to be supplied to the turbine 542 by the supply device 160 from decreasing and avoid a situation in which energy to be imparted to the turbine 542 by the second exhaust gas decreases.

### [Sixth Embodiment: Fuel Cell System 600]

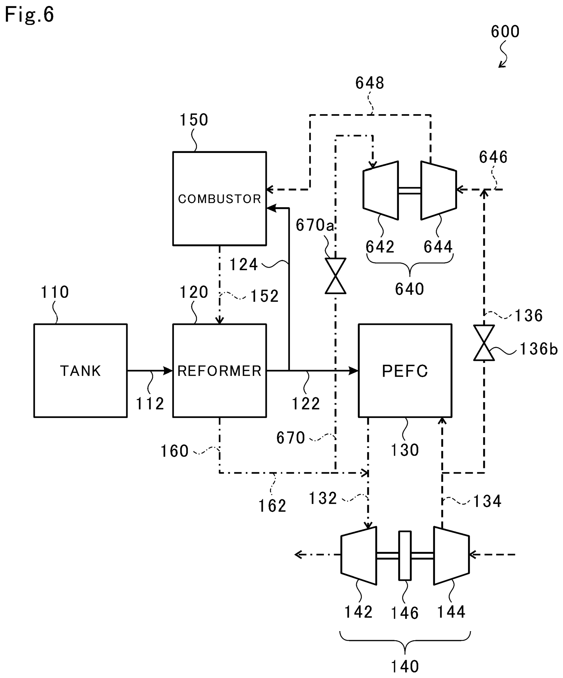

FIG. 6 is a diagram describing an example of a fuel cell system 600 according to a sixth embodiment. As illustrated in FIG. 6, the fuel cell system 600 according to the sixth embodiment includes the tank 110, the reformer 120, the polymer electrolyte fuel cell 130, the supercharger 140, the combustor 150, the third exhaust gas supply flow path 152, a combustor supercharger 640, the supply device 160, and a second exhaust gas flow path 670. It is noted that a component which is substantially equal to that of the fuel cell system 100 will be denoted with the same reference sign to omit description. The fuel cell system 600 according to the present embodiment is different from the fuel cell system 100 in that the combustor supercharger 640 is added instead of the flow control valve 136a, and the fuel cell system 600 is the same as the fuel cell system 100 in other respects.

The combustor supercharger 640 includes a combustor turbine 642 and a combustor compressor 644. The combustor supercharger 640 does not have to include any motor.

The second exhaust gas flow path 670 that branches from the second exhaust gas flow path 162 of the supply device 160 is connected to the combustor turbine 642. A portion of the second exhaust gas discharged from the reformer 120 is supplied to the combustor turbine 642 through the second exhaust gas flow path 162 and the second exhaust gas flow path 670. The combustor turbine 642 is then rotated by the second exhaust gas discharged from the reformer 120. It is noted that the second exhaust gas flow path 670 is provided with a flow control valve 670a. The flow control valve 670a determines the distribution ratio between the second exhaust gas to be supplied from the reformer 120 to the turbine 142 and the second exhaust gas to be supplied from the reformer 120 to the combustor turbine 642.

The combustor compressor 644 is connected to the combustor turbine 642. The combustor compressor 644 is rotated by the rotation of the combustor turbine 642. An oxygen-containing gas supply flow path 646 is connected to the combustor compressor 644. The oxygen-containing gas supply flow path 646 connects the combustor compressor 644 and an oxygen-containing gas supply source.

In addition, in the present embodiment, the oxygen-containing gas flow path 136 connects the oxygen-containing gas flow path 134 and the oxygen-containing gas supply flow path 646. The oxygen-containing gas flow path 136 is provided with an on-off valve 136b.

The combustor compressor 644 compresses the oxygen-containing gas. In the present embodiment, the combustor compressor 644 is connected to the combustor 150 via an oxygen-containing gas flow path 648. The oxygen-containing gas compressed by the combustor compressor 644 is therefore supplied to the combustor 150 through the oxygen-containing gas flow path 648.

Additionally, when the fuel cell system 600 is started, the on-off valve 136b is opened and the combustor compressor 644 is supplied with the oxygen-containing gas compressed by the compressor 144 of the supercharger 140. The on-off valve 136b is then closed once the rotational speed of the combustor compressor 644 reaches a rotational speed for a rated operation. The combustor compressor 644 hereby compresses the oxygen-containing gas supplied through the oxygen-containing gas supply flow path 646 during the rated operation.

As described above, the fuel cell system 600 according to the sixth embodiment includes the combustor turbine 642 and the combustor compressor 644 in addition to the components of the fuel cell system 100.

This allows the fuel cell system 600 according to the sixth embodiment to rotate the combustor turbine 642 of the combustor supercharger 640 using the second exhaust gas. It is thus possible for the fuel cell system 600 according to the sixth embodiment to supply mechanical power from the combustor turbine 642 to the combustor compressor 644 without consuming any electric power. This allows the fuel cell system 600 according to the sixth embodiment to reduce electric power to be consumed by the supercharger 140.

The embodiments have been described so far with reference to the appended drawings, but it goes without saying that the present disclosure is not limited to the embodiments. It is apparent that a person skilled in the art may find various alterations and modifications within the scope of the claims and it should be understood that they will naturally come under the technical scope of the present disclosure.

For example, the case where the fuel cell systems 100, 200, 300, 400, 500, and 600 each include the combustor 150 has been described as an example in the first to sixth embodiments. The combustor 150 is included, thereby making it possible to thermally decompose ammonia efficiently in the reformer 120. However, the fuel cell systems 100, 200, 300, 400, 500, and 600 may each include a device capable of supplying the reformer 120 with a high-temperature fluid instead of the combustor 150. The device capable of supplying the high-temperature fluid may be, for example, a solid oxide fuel cell (Solid Oxide Fuel Cell). In this case, it is favorable to supply an exhaust gas (any one or both of a cathode off-gas and an anode off-gas) discharged by the solid oxide fuel cell to the reformer 120.

In addition, the case where the first heat exchanger 414 is provided between the second heat exchanger 310 and the turbine 142 in the first exhaust gas flow path 132 in the fuel cell system 400 according to the fourth embodiment has been described as an example. The first heat exchanger 414 may be, however, provided between the PEFC 130 and the second heat exchanger 310 in the first exhaust gas flow path 132.

In addition, the fuel cell systems 200, 300, and 400 according to the second to fourth embodiments may each omit the flow control valve 136a and include the supercharger 540 instead of the supercharger 140. Similarly, the fuel cell systems 200, 300, and 400 according to the second to fourth embodiments may each omit the flow control valve 136a and include the combustor supercharger 640 in addition to the supercharger 140.

### Reference Signs List

- 100: fuel cell system
- 110: tank
- 120: reformer
- 130: polymer electrolyte fuel cell (PEFC)
- 142: turbine
- 144: compressor
- 150: combustor
- 152: third exhaust gas supply flow path
- 160: supply device
- 200: fuel cell system
- 210: supply device
- 214: first heat exchanger
- 300: fuel cell system
- 310: second heat exchanger (heat exchanger)
- 400: fuel cell system
- 410: supply device
- 414: first heat exchanger
- 500: fuel cell system
- 542: turbine
- 542a: first exhaust gas inlet port
- 542b: second exhaust gas inlet port
- 600: fuel cell system
- 642: combustor turbine
- 644: combustor compressor

## Claims

1. A fuel cell system comprising:
a tank configured to store ammonia;
a reformer configured to thermally decompose ammonia supplied from the tank to generate hydrogen;
a polymer electrolyte fuel cell configured to generate electricity using, as a fuel, the hydrogen generated by the reformer;
a turbine configured to be rotated by a first exhaust gas produced in the polymer electrolyte fuel cell;
a compressor configured to compress an oxygen-containing gas and supply the oxygen-containing gas to the polymer electrolyte fuel cell, the compressor being connected to the turbine; and
a supply device configured to cause a second exhaust gas discharged from the reformer to join the first exhaust gas or exchange heat between the second exhaust gas and the first exhaust gas.

2. The fuel cell system according to claim 1, comprising:
a combustor configured to combust the hydrogen generated by the reformer; and
a third exhaust gas supply flow path configured to supply a third exhaust gas produced in the combustor to the reformer.

3. The fuel cell system according to claim 1 or 2, comprising a heat exchanger configured to exchange heat between the hydrogen generated by the reformer and the first exhaust gas produced in the polymer electrolyte fuel cell.

4. The fuel cell system according to claim 2, wherein
a portion of an oxygen-containing gas to be fed to the polymer electrolyte fuel cell is diverted and fed to the combustor,
the turbine includes a first exhaust gas inlet port and a second exhaust gas inlet port,
the second exhaust gas discharged from the reformer is fed to the first exhaust gas inlet port, and
the first exhaust gas produced in the polymer electrolyte fuel cell is fed to the second exhaust gas inlet port.

5. The fuel cell system according to claim 2, comprising:
a combustor turbine configured to be rotated by the second exhaust gas discharged from the reformer; and
a combustor compressor configured to compress an oxygen-containing gas and supply the oxygen-containing gas to the combustor, the combustor compressor being connected to the combustor turbine.
